# EUROPÄISCHE PATENTSCHRIFT

(11) **EP 3 383 595 B1**
(45) Veröffentlichungstag und Bekanntmachung des Hinweises auf die Patenterteilung: **01.09.2021**
(21) Anmeldenummer: 16804748.8
(22) Anmeldetag: 28.11.2016
(51) Int. Cl.: B25J 9/16, F16P 3/14, G05B 19/418

(54) **DARSTELLUNG VARIABLER SCHUTZFELDER**
DISPLAYING OF VARIABLE SAFETY ZONES
REPRÉSENTATION DE ZONES PROTÉGÉES VARIABLES

(30) Priorität: 04.12.2015 DE 102015224309
(43) Veröffentlichungstag der Anmeldung: 10.10.2018
(73) Patentinhaber: KUKA Deutschland GmbH, 86165 Augsburg (DE)
(72) Erfinder: GUHL, Tim, 86165 Augsburg (DE); WALTHER, Steffen, 80687 München (DE); GESCHKE, Harald, 86316 Friedberg (DE); KHALDI, Abdelghani, 86161 Augsburg (DE); AKBAS, Adil, 86179 Augsburg (DE)
(74) Vertreter: Mader, Joachim
(86) Internationale Anmeldenummer: PCT/EP2016/079033
(87) Internationale Veröffentlichungsnummer: WO 2017/093197

(56) Entgegenhaltungen:
- EP-A2- 2 380 709
- DE-A1-102010 007 027

## Beschreibung

### 1. Technischer Bereich

Die vorliegende Erfindung betrifft ein Manipulatorsystem, insbesondere ein fahrerloses Transportsystem, als auch ein Verfahren zum Betreiben eines Manipulatorsystems.

### 2. Technischer Hintergrund

Roboter, und insbesondere Industrieroboter, sind frei-programmierbare, programmgesteuerte Handhabungsgeräte, welche beispielsweise in der Montage oder Fertigung eingesetzt werden können. Dabei können sie entsprechend einer vorgegebenen Bahnplanung definierte Bewegungen durchführen und Werkstücke handhaben oder bearbeiten. Die eigentliche Mechanik eines Roboters kann als Manipulator bezeichnet werden. Diese besteht in der Regel aus einer Anzahl an beweglichen, aneinander geketteten Gliedern oder Achsen.

Fahrerlose Transportsysteme (FTS) werden häufig in Produktionsbetrieben eingesetzt, um beispielsweise Bauteile oder Werkstücke von einer Arbeitsstation zu einer nächsten Arbeitsstation zu transportieren. Ein fahrerloses Transportsystem kann dabei seinen eigenen Fahrantrieb aufweisen, und automatisch gesteuert werden. Fahrerlose Transportsysteme können auch eingesetzt werden, um Manipulatoren oder Industrieroboter zu bewegen, sodass diese an verschiedenen Arbeitsstationen bestimmte Arbeitsschritte durchführen können.

Generell kann ein fahrerloses Transportsystem als Fördersystem betrachtet werden, welches zumindest ein fahrerloses Transportfahrzeug umfassen kann. Das Fahrzeug kann dabei multi-direktional und insbesondere omni-direktional beweglich sein. Zu diesem Zweck kann es entsprechende omni-direktionale Räder aufweisen, um eine hohe Beweglichkeit und Flexibilität des fahrerlosen Transportsystems zu ermöglichen. Fahrerlose Transportfahrzeuge werden automatisch gesteuert. Hierzu kann beispielsweise eine fahrzeuginterne Steuereinrichtung verwendet werden, welche entsprechende Antriebe des fahrerlosen Transportsystems ansteuert, um eine gewünschte Bewegung des Fahrzeugs zu bewirken. Der Steuereinrichtung kann ein Programm zugrunde liegen, welches die Bewegung des Fahrzeugs, gekennzeichnet durch die Richtung und Geschwindigkeit, vorgibt.

Um einen sicheren Betrieb eines Manipulators oder eines fahrerlosen Transportsystems in einer Werkhalle zu ermöglichen, sind diese häufig mit Laserscannern ausgerüstet, mit welchen ein sogenanntes Schutzfeld (häufig auch Sicherheitsfläche oder Sicherheitsbereich genannt) überwacht werden kann. Insbesondere kann das Schutzfeld einen horizontalen Bereich um den Manipulator herum abdecken. Wenn beispielsweise ein Hindernis, wie beispielsweise ein Mensch, in das Schutzfeld eintritt, kann mittels der Laserscanner eine Verletzung des Schutzfeldes erkannt bzw. detektiert werden. In Reaktion hierauf kann der Manipulator z.B. stoppen, um eine mögliche Kollision zu vermeiden. Somit wird eine sichere Mensch-Roboter-Kollaboration (MRK) ermöglicht. Insbesondere ist eine solche Schutzfeldüberwachung bei dem Einsatz von fahrerlosen Transportsystemen notwendig, da diese oft ortsflexibel in einer MRK-Umgebung eingesetzt werden.

Die Schutzfelder können an die jeweilige Umgebung oder den Betrieb des Manipulators oder des fahrerlosen Transportsystems angepasst sein. Wenn ein Manipulator beispielsweise ein großes Werkzeug führt, kann ein großes Schutzfeld verwendet werden, um einen entsprechend größeren Arbeitsbereich abdecken zu können. In einem anderen Beispiel kann bei einem fahrerlosen Transportsystem das Schutzfeld entsprechend der Geschwindigkeit des fahrerlosen Transportsystems angepasst werden. Beispielsweise kann bei einer hohen Geschwindigkeit ein größeres Schutzfeld verwendet werden, um Verzögerungen und längere Bremswege zu berücksichtigen.

In der Patentschrift EP 2 558 886 B1 wird eine Einrichtung zur Überwachung eines dreidimensionalen Sicherheitsbereichs beschrieben. Diese Überwachungseinrichtung umfasst eine Aufnahmevorrichtung, wie beispielsweise eine Infrarotkamera, und einen Projektor, welcher beispielsweise im infraroten Bereich einen zu überwachenden Sicherheitsbereich erzeugt. Mittels der Infrarotkamera werden Abbilder des Sicherheitsbereichs aufgenommen, und mittels einer Auswertevorrichtung dahingehend ausgewertet, ob Personen oder Objekte in den Sicherheitsbereich eingedrungen sind. Nachteilig ist daran, dass die Projektionsvorrichtung Teil der Überwachungseinrichtung ist und daher nicht unabhängig von dieser betrieben werden kann. Fällt die Projektionsvorrichtung bspw. aus, so ist ein sicherer Betrieb des Systems nicht mehr gewährleistet. Ferner kann die Projektionsvorrichtung nur eingesetzt werden, wenn eine für eine sichere Überwachung notwendige Lichtstärke erreicht werden kann, was insbesondere bei hoher Umgebungslichtstäke problematisch werden kann.

Bei einem fahrerlosen Transportsystem kann das Schutzfeld beispielsweise nur in Fahrtrichtung des Fahrzeugs ausgerichtet sein, um ungewollte Schutzfeldverletzungen zu unterbinden. Damit sich niemand seitlich zu nah an das Fahrzeug annähert, können Hinweisschilder an diesem Fahrzeug angebracht sein. Eine solche Anzeige ist jedoch unflexibel, und kann je nach Bauform des Fahrzeugs eventuell nicht an diesem angebracht werden. Solche Beschriftungen können nicht oder nur mit hohem Aufwand an eine momentane Fahrsituation angepasst werden.

Das Dokument DE 10 2010 007 027 A1 betrifft ein Verfahren zur Überwachung eines Manipulatorraumes eines mobilen Manipulators, insbesondere eines mobilen Roboters, durch Überwachen des Raumes auf nicht vorgesehene Objekte mittels einer Umgebungserfassungseinrichtung.

Der vorliegenden Erfindung liegt die Aufgabe zugrunde, ein Manipulatorsystem bereitzustellen, welches sicher in einer MRK-Umgebung betrieben werden kann.

Diese und weitere Aufgaben, die aus der folgenden Beschreibung ersichtlich werden, werden durch ein Manipulatorsystem gemäß Anspruch 1 und ein Verfahren zum Betreiben eines Manipulatorsystems gemäß Anspruch 13 gelöst.

### 3. Inhalt der Erfindung

Die vorliegende Erfindung betrifft ein Manipulatorsystem, insbesondere ein fahrerloses Transportsystem. Das Manipulatorsystem kann dabei einen Manipulator umfassen, welcher auch eine mobile Basis aufweisen kann. Vorzugsweise umfasst das Manipulatorsystem ein fahrerloses Transportfahrzeug, welches vorzugsweise einen Manipulator tragen und bewegen kann. Vorzugsweise eignet sich das Manipulatorsystem für den Einsatz in einer MRK-Umgebung. Das fahrerlose Transportsystem kann dabei einen mobilen Manipulator umfassen, und beispielsweise einen Roboterarm aufweisen.

Das Manipulatorsystem weist eine Überwachungseinrichtung auf, die eingerichtet ist, um ein Schutzfeld des Manipulatorsystems zu überwachen. Durch Überwachen des Schutzfeldes kann beispielsweise erkannt werden, dass sich ein Objekt oder Hindernis in dem Schutzfeld befindet, und folgend eine entsprechende Reaktion des Manipulatorsystems eingeleitet werden. Das Schutzfeld kann dabei dynamisch an die Umgebung oder einen Zustand des Manipulatorsystems angepasst sein, und dabei beispielsweise eine komplexe Kontur aufweisen, um einen möglichst sicheren Betrieb des Manipulatorsystems zu ermöglichen.

Vorzugsweise umfasst die Überwachungseinrichtung ein Mittel zur Erfassung von Objekten in dem Schutzfeld, wobei das Mittel vorzugsweise eine laser-, kamera-, radar- , ultraschall-, infrarot- und/oder lidargestützte Vorrichtungen umfasst. Die Überwachungseinrichtung kann vorzugsweise ein Mittel umfassen, welches beispielsweise die Schutzfeldüberwachung unter Verwendung von Infrarot-, Ultraschall-, parallaktischer oder schärfe- bzw. kontrastoptischer Entfernungsmessung ermöglicht. Die Überwachungseinrichtung kann hierzu optische, opto-elektronische, und/oder bildverarbeitende Systeme verwenden. Vorzugsweise kann die Überwachungseinrichtung ein Multi-Kamerasystem, eine Stereo-Kamera, eine 3D-Kamera und/oder eine Flugzeitkamera umfassen, um die Schutzfeldüberwachung zu ermöglichen. Besonders bevorzugt umfasst die Überwachungseinrichtung einen oder mehrere Laserscanner zur Erfassung von Objekten in dem Schutzfeld. Solche Laserscanner arbeiten zuverlässig und erlauben es, hohe Sicherheitsanforderungen einzuhalten. Generell kann das erfassbare Objekt jeder Körper sein, welcher in einer Umgebung des Manipulatorsystems einen gewissen Raum einnimmt und mittels der Überwachungseinrichtung erfassbar ist oder mittels dieser detektiert werden kann. Die Überwachungseinrichtung muss das Objekt in dem Schutzfeld dabei nicht unbedingt identifizieren, es ist vielmehr für einen sicheren Einsatz des Manipulatorsystems ausreichend, dass das bloße Vorhandensein des Objekts in dem Schutzbereich erkannt wird.

Das Manipulatorsystem umfasst zusätzlich zur Überwachungseinrichtung, d.h. vorzugsweise auch strukturell unabhängig von der Überwachungseinrichtung, eine Projektionsvorrichtung, die eingerichtet ist, um Schutzfeldinformation an die Umgebung des Manipulatorsystems zu projizieren. Die Projektionsvorrichtung ist nicht mit der Überwachungseinrichtung identisch. Vorzugsweise handelt es sich bei der Projektionsvorrichtung und der Überwachungseinrichtung um zwei getrennte Systeme, welche jedoch mittels derselben Steuerung angesteuert werden können und die funktional miteinander zusammenwirken und dementsprechend funktional vorzugsweise auch gekoppelt sind. Die Projektionsvorrichtung und die Überwachungseinrichtung können getrennte Steuerungen aufweisen, welche funktional miteinander gekoppelt sein können bzw. Daten austauschen können. Die Projektionsvorrichtung und Überwachungseinrichtung können als getrennte Systeme zwar in einem gemeinsamen Gehäuse untergebracht sein, um bspw. den benötigten Bauraum zu verringern. Vorzugsweise sind sie jedoch räumlich getrennt angeordnet, wobei die Projektionsvorrichtung an einer Stelle vorgesehen ist, die ein optimales projizieren ermöglicht (z.B. von einer erhöhten Position), und die Überwachungseinrichtung an einer anderen Stelle, von der die Überwachung optimal möglich ist (z.B. an einer seitlichen Position an einem Fahrzeug).

Die Schutzfeldinformation kann dabei Information sein, die im Zusammenhang zu dem Schutzfeld steht. Beispielsweise kann eine Geschwindigkeitsänderung eine Änderung eines Schutzfeldes bzw. eine Schutzfeldanpassung hervorrufen, welche wiederum durch die Schutzfeldinformation beschrieben werden kann. Die Projektionsvorrichtung kann beispielsweise einen Projektor umfassen, welcher Licht emittieren kann, um die Schutzfeldinformation an die Umgebung zu projizieren. Durch dieses Projizieren kann die Schutzfeldinformation insbesondere an die MRK-Umgebung des Manipulatorsystems signalisiert werden. Vorzugsweise kann dabei jegliche Information, die in einer Steuerung des Manipulatorsystems bereitgestellt ist, einer Person bzw. einem Werker in der Umgebung jedoch unbekannt sein kann, durch das Projizieren signalisiert werden. Dies gilt insbesondere für Informationen, welche sicherheitsrelevante Aspekte, wie beispielsweise Ausmaße von Schutzfeldern oder Zustandsänderungen des Manipulatorsystems umfassen.

Es ist somit vorteilhaft möglich, sicherheitsrelevante Informationen an die Umgebung des Manipulatorsystems zu signalisieren. Beispielsweise kann auf dem Boden um das Manipulatorsystem herum mittels der Projektionsvorrichtung im Wesentlichen der Bereich optisch gekennzeichnet werden, welcher durch die Überwachungseinrichtung überwacht wird. Dadurch kann ein Werker direkt erkennen, wie nahe er sich dem Manipulatorsystem annähern kann, ohne das Schutzfeld zu verletzen. Hierzu muss nicht eine komplexe Kontur des Schutzfeldes durch die Projektionsvorrichtung optisch gekennzeichnet werden. Vielmehr kann eine vereinfachte Kontur projiziert werden, welche im Wesentlichen das Schutzfeld abdeckt. Hierdurch wird der Projektionsaufwand deutlich verringert. Ferner kann mit der Projektionsvorrichtung beispielsweise dargestellt werden, in welchem Bereich ein fahrerloses Transportsystem fahren wird, sodass ein Werker diesen Bereich verlassen kann. Mittels der Projektionsvorrichtung können auch Komplikationen bzw. Probleme signalisiert werden. Beispielsweise kann somit signalisiert werden, dass ein Weg versperrt ist, sodass ein Werker die Störung beheben kann. Oft sind Fehlerquellen nicht direkt ersichtlich, durch die Projektionsvorrichtung kann jedoch einem Werker intuitiv mitgeteilt werden, welche Fehlerquelle vorliegt und wie diese behoben werden kann. Beispielsweise kann optisch dargestellt werden, dass die momentanen Schutzfeldausmaße größer als ein zu durchfahrender Korridor ist.

Die Schutzfeldüberwachung kann somit beispielsweise mittels Ultraschall- oder Infrarottechnik durchgeführt werden, wobei diese Überwachung für Menschen bzw. Werker nicht erkennbar ist. Die Projektionsvorrichtung erlaubt es dabei dem Werker in der Umgebung des Manipulatorsystems sichtbar zu signalisieren, welcher Bereich durch die Überwachungseinrichtung überwacht wird. Der Werker weiß nun zumindest grob, wo sich das für ihn unsichtbare Schutzfeld befindet. Dadurch kann effizient verhindert werden, dass der Werker ungewollt das Schutzfeld verletzt.

Vorzugsweise ist die Überwachungseinrichtung eingerichtet, um das Schutzfeld des Manipulatorsystems zu überwachen, wenn die Projektionsvorrichtung keine Schutzfeldinformation projiziert. Die Überwachungseinrichtung und die Projektionsvorrichtung können somit zwei Komponenten des Manipulatorsystems darstellen, welche im Wesentlichen unabhängig voneinander angesteuert werden können. Obwohl beide unter Berücksichtigung eines zu überwachenden Schutzfeldes angesteuert werden können, geschieht diese Ansteuerung vorteilhaft unabhängig voneinander. Die Überwachungseinrichtung kann dabei separat zu der Projektionsvorrichtung an dem Manipulatorsystem bereitgestellt sein. Selbst wenn die Projektionsvorrichtung von dem Manipulatorsystem entfernt wird, kann die Überwachungseinrichtung uneingeschränkt das Schutzfeld des Manipulatorsystems weiter überwachen. Somit kann sichergestellt werden, dass ein Defekt der Projektionsvorrichtung keine Auswirkung auf die Überwachungseinrichtung hat, sodass sicherheitsrelevante Aspekte unberührt bleiben. Ebenso kann beispielsweise die Projektionsvorrichtung uneingeschränkt Schutzfeldinformationen an die Umgebung des Manipulatorsystems projizieren, selbst wenn die Überwachungseinrichtung selber ausgeschaltet ist. Dies ist vorteilhaft, da in einem derartigen Fall die Projektionsvorrichtung ein zukünftiges Schutzfeld anzeigen kann, bevor dieses tatsächlich aktiviert wird. Bei einer vorgesehenen Vergrößerung des Schutzfeldes kann somit einem Werker bspw. signalisiert werden, dass er einen bestimmten Bereich verlassen muss, bevor tatsächlich das größere Schutzfeld aktiviert wird. Hiermit können ungewollte Stopps des Systems vermieden werden.

Die Projektionsvorrichtung ist eingerichtet, um eine Lichtprojektion an die Umgebung des Manipulatorsystems zu erzeugen, um die Schutzfeldinformation sichtbar zu projizieren. Die Lichtprojektion kann somit eine gezielte Projektion auf die Umgebung darstellen, und kann dabei eindeutig durch einen Werker auf der Umgebung erkannt werden. Mit der Projektionsvorrichtung wird somit Licht emittiert, dessen Wellenlänge im sichtbaren Bereich liegt. Somit kann die Schutzfeldinformation optisch einem Menschen mitgeteilt werden. Vorzugsweise ist die Lichtprojektion zumindest teilweise auf den Boden der Umgebung gerichtet. Die Lichtprojektion muss dabei nicht den Boden treffen, sondern kann beispielsweise ein Objekt treffen, welches auf dem Boden der Umgebung vorhanden ist. Ein Werker erkennt auch in diesem Fall direkt die Schutzfeldinformation, beispielsweise erkennt er, wie nahe er sich dem Manipulatorsystem annähern darf. Ferner kann durch Variation der Wellenlänge zusätzliche Information an die Umgebung signalisiert werden: Beispielsweise kann eine rote Farbe anzeigen, dass eine Schutzfeldüberwachung aktiv ist, während eine blaue Farbe anzeigen kann, dass das Manipulatorsystem in einem interaktivem Modus arbeitet. Eine rote Farbe kann auch kennzeichnen, dass eine Betriebstemperatur des Manipulatorsystems über einen Grenzwert liegt, sodass sich ein Bediener von dem Manipulatorsystem entfernen sollte. Das Projizieren von Schutzfeldinformation mittels der Projektionsvorrichtung kann vorzugsweise unter Berücksichtigung von bekannten bzw. bereitgestellten Umgebungsinformationen, wie beispielsweise 3D-Umgebungsinformation erfolgen. Beispielsweise können bekannte Höheninformationen berücksichtigt werden, um die Schutzfeldinformation präzise auch bei unterschiedlichen Höhen der Umgebung zu projizieren.

Vorzugsweise ist eine Kontur der Lichtprojektion rund, oval, kreisförmig oder elliptisch. Die Kontur kann dabei vorzugsweise frei konfigurierbar bzw. frei wählbar sein. Dadurch kann ohne großen Aufwand grob der Bereich um das Manipulatorsystem gekennzeichnet werden, welcher von einem Mensch nicht betreten werden soll. Somit können auch komplexe Konturen des Schutzfeldes vereinfacht an die Umgebung signalisiert werden. Die Kontur der Lichtprojektion kann auch rechteckig sein, und beispielsweise einen seitlichen Bereich eines fahrerlosen Transportsystems kennzeichnen, welcher von einem Menschen gemieden werden sollte. Vorzugsweise ist die Kontur der Lichtprojektion verschieden von einer Kontur des Schutzfeldes. Die Lichtprojektion kann somit sehr flexibel eingesetzt werden, um Informationen an die MRK-Umgebung zu signalisieren. Dies ist ein weiterer Vorteil einer strukturellen Trennung von Überwachungseinrichtung und Projektionseinrichtung.

Vorzugsweise umfasst die Lichtprojektion eine Kodierung und insbesondere ein Muster und/oder ein Symbol entsprechend der Schutzfeldinformation. Beispielsweise kann somit mittels eines Pfeils angedeutet werden, in welche Richtung ein fahrerloses Transportsystem fährt, bzw. welcher Bereich zukünftig von der Überwachungseinrichtung überwacht wird. Ferner kann ein genormtes Warnsymbol an die Umgebung projiziert werden, welches beispielsweise für Werker unmissverständlich einen Gefahrbereich kennzeichnen kann.

Vorzugsweise entspricht eine horizontale Erstreckung der Lichtprojektion zumindest einer horizontalen Erstreckung des Schutzfeldes. Es wird also beispielsweise auf dem Boden ein Bereich gekennzeichnet, welcher mindestens so groß ist, wie der mittels der Überwachungseinrichtung überwachte Bereich des Bodens. Somit kann ein Werker direkt erkennen, welcher Bereich überwacht wird bzw. wo er sich nicht aufhalten sollte.

Vorzugsweise deckt die Lichtprojektion auf einer horizontalen Ebene zumindest einen durch das Schutzfeld abgedeckten Bereich ab. Insbesondere vorzugsweise deckt die Lichtprojektion auf der horizontalen Ebene einen größeren Bereich ab, als den durch das Schutzfeld abgedeckten Bereich. Die horizontale Ebene kann beispielsweise der Boden der Umgebung sein, oder eine andere zweidimensionale Schnittfläche durch den dreidimensionalen Raum. Vorzugsweise entspricht der größere Bereich, welcher durch die Lichtprojektion abgedeckt wird, 101% bis 150%, weiter vorzugsweise 102% bis 140%, weiter vorzugsweise 103% bis 130%, weiter vorzugsweise 104% bis 120% und am meisten bevorzugt 105% bis 110% des durch das Schutzfeld abgedeckten Bereichs. Der Fachmann versteht, dass diese Bereichsangaben kombinierbar sind, entsprechend der jeweiligen Anwendungsform. Somit kann tendenziell ein größerer Bereich optisch gekennzeichnet werden, als durch die Überwachungseinrichtung überwacht wird. Das Schutzfeld kann beispielsweise dynamisch seine Größe ändern. Da ein Werker einen größeren Bereich meidet, wird hierdurch keine ungewollte Schutzfeldverletzung hervorgerufen.

Ein momentanes Schutzfeld kann einer momentanen Überwachung des Manipulatorsystems zugrunde liegen. In einem momentanen Betrieb kann somit die Überwachungseinrichtung das momentane Schutzfeld, bzw. aktuell gültige Schutzfeld des Überwachungssystems überwachen. Erfindungsgemäß ist das Schutzfeld ein zukünftiges Schutzfeld, welches einer zukünftigen Überwachung des Manipulatorsystems zu einem späteren Zeitpunkt zugrunde liegt. Es kann somit durch die Lichtprojektion ein Bereich auf dem Boden abgedeckt werden, welcher zu einem späteren Zeitpunkt durch die Überwachungseinrichtung überwacht wird. Dadurch kann einem Werker signalisiert werden, dass sich die Schutzfeldgröße ändern wird, sodass der Werker den betroffenen Bereich verlassen kann.

Vorzugsweise umfasst die Projektionsvorrichtung zumindest einen Projektor und ein separat von dem Projektor bereitgestelltes Umlenkmittel. Ein Projektor kann dabei eine Lichtquelle umfassen, um eine Projektion hervorzurufen. Das Umlenkmittel lenkt dabei das von dem Projektor emittierte Licht auf die Umgebung. Somit kann präzise definiert werden, wie die Projektion und insbesondere Lichtprojektion an die Umgebung erfolgen soll. Ferner kann somit auch bei größeren Manipulatorsystemen die Schutzfeldinformation effizient an die Umgebung projiziert werden. Insbesondere vorzugsweise umfasst das Umlenkmittel einen Spiegel und/oder eine Linse, und das Umlenkmittel kann ferner vorzugsweise beweglich angeordnet sein. Somit kann durch Bewegen des Spiegels, zum Beispiel, ein bestimmtes Muster auf dem Boden erzeugt werden.

Vorzugsweise umfasst die Projektionsvorrichtung zumindest einen Projektor, welcher beweglich und vorzugsweise drehbar an dem Manipulatorsystem bereitgestellt ist. Durch Bewegen und/oder Drehen des Projektors kann somit ein bestimmtes Muster beispielsweise auf den Boden projiziert werden. Insbesondere vorzugsweise kann der Projektor auf einer drehbaren Plattform bereitgestellt sein, welche sich schnell dreht, sodass ein durch den Projektor auf den Boden projizierter Punkt durch einen Menschen als geschlossene Kontur bzw. Linie auf dem Boden dargestellt wird.

Vorzugsweise umfasst die Projektionsvorrichtung zumindest einen Projektor und zumindest eine Maske. Die Maske wird dabei von dem Projektor beleuchtet und definiert ein Projektionsmuster. Durch diese Maske kann ein bestimmter Lichtkegel bzw. eine gewünschte Lichtprojektion hervorgerufen werden, welche auf den Boden projiziert werden kann. Vorzugsweise können mehrere Masken bereitgestellt sein, welche während des Betriebs selektiv verwendet werden können. Vorzugsweise können eine oder mehrere Masken veränderlich sein, um die Projektion zu ändern.

Weiterhin betrifft die Erfindung ein Verfahren zum Betreiben eines Manipulatorsystems. Insbesondere eignet sich das Verfahren dabei zum Betreiben eines der oben beschriebenen Manipulatorsysteme. Das Manipulatorsystem umfasst dabei eine Überwachungseinrichtung, und ferner bzw. zusätzlich eine Projektionsvorrichtung. Das Verfahren umfasst ein Überwachen eines Schutzfeldes des Manipulatorsystems mittels der Überwachungseinrichtung. Ferner umfasst das Verfahren ein Projizieren von Schutzfeldinformationen an die Umgebung des Manipulatorsystems mittels der Projektionsvorrichtung. Die einzelnen Schritte des Verfahrens können dabei mittels einer Steuerung durchgeführt werden, welche eine oder mehrere Steuereinrichtungen umfassen kann. Beispielsweise kann die Überwachungseinrichtung und Projektionsvorrichtung durch zwei getrennte Steuereinrichtungen geregelt werden, die in Kommunikation miteinander stehen können.

Das oben beschriebene Projizieren von Schutzfeldinformationen erfolgt dabei vorzugsweise auf einer der folgenden Größen: eine Form und/oder eine Formänderung des Schutzfeldes, eine Größe und/oder eine Größenänderung des Schutzfeldes, einen Zustand (bzw. momentaner Zustand) und/oder eine Zustandsänderung des Manipulatorsystems, eine Geschwindigkeit und/oder eine Beschleunigung des Manipulatorsystems, eine Orientierung und/oder eine Umorientierung des Manipulatorsystems, eine Bahnplanung des Manipulatorsystems, einen Betriebsmodus des Manipulatorsystems, eine Umgebungskarte. Somit kann jegliche Information, welche eine Konfiguration des Schutzfeldes oder einen Aspekt der Schutzfeldüberwachung betrifft, an die Umgebung projiziert werden, bzw. einem Werker optisch signalisiert werde. Insbesondere die Bahnplanung, welche die Bewegung des Manipulatorsystems vorgeben kann, kann somit herangezogen werden, um sicherheitsrelevante Informationen an die Umgebung zu signalisieren.

Vorzugsweise erfolgt das Projizieren von Schutzfeldinformation quasikontinuierlich während des Betriebs des Manipulatorsystems. Vorzugsweise kann das Projizieren in jedem Interpolationstakt bzw. IPO-Takt des Manipulatorsystems angepasst werden. Somit kann flexibel und dynamisch die Schutzfeldinformation an die Umgebung signalisiert werden.

### 4. Beschreibung bevorzugter Ausführungsbeispiele

Im Folgenden wird die vorliegende Erfindung unter Bezugnahme auf die beiliegenden Figuren beschrieben. Dabei sind gleiche Merkmale mit gleichen Bezugszeichen gekennzeichnet. Es zeigt:
Fig. 1 schematisch ein Manipulatorsystem gemäß einer Ausführungsform;
Fig. 2 schematisch ein Manipulatorsystem umfassend einen stationären Manipulator gemäß einer weiteren Ausführungsform;
Fig. 3 schematisch ein fahrerloses Transportsystem mit zwei Projektoren gemäß einer weiteren Ausführungsform;
Fig. 4 schematisch ein fahrerloses Transportsystem mit einem Projektor gemäß einer weiteren Ausführungsform;
Fig. 5 schematisch ein fahrerloses Transportsystem mit beweglichen Projektoren gemäß einer weiteren Ausführungsform;
Fig. 6 schematisch ein fahrerloses Transportsystem mit einem drehbaren Projektor gemäß einer weiteren Ausführungsform;
Fig. 7 schematisch ein fahrerloses Transportsystem mit einem Projektor und einer Linse gemäß einer weiteren Ausführungsform;
Fig. 8 schematisch ein fahrerloses Transportsystem mit einem Projektor und Spiegeln gemäß einer weiteren Ausführungsform; und
Fig. 9 schematisch ein fahrerloses Transportsystem mit mehreren Lichtprojektionen gemäß einer weiteren Ausführungsform.

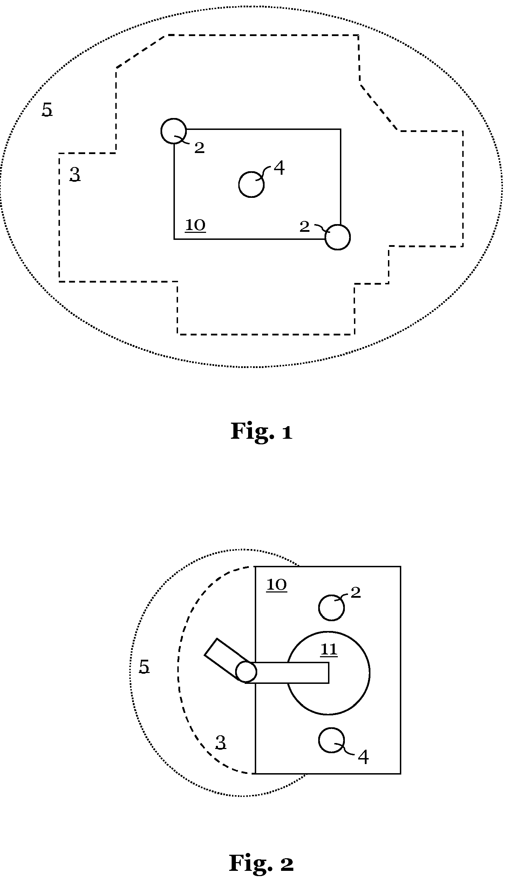

In der Figur 1 ist ein Manipulatorsystem 10 dargestellt, welches Laserscanner 2 umfasst, um ein Schutzfeld 3 zu überwachen. Das Schutzfeld 3 weist dabei eine komplexe Kontur auf. Ferner ist eine Projektionsvorrichtung umfassend einen Projektor 4 an dem Manipulatorsystem 10 bereitgestellt. Der Projektor 4 wirft eine Lichtprojektion 5 auf den Boden. Hierdurch wir eine Schutzfeldinformation an die Umgebung signalisiert. Diese Lichtprojektion 5 ist dabei größer als das Schutzfeld 3, und kennzeichnet auf dem Boden einen Bereich, welcher das Schutzfeld 3 umfasst. Die Lichtprojektion ist in diesem Fall stark vereinfacht um das Schutzfeld besser kommunizieren zu können. Der Fachmann versteht, dass die Form der Lichtprojektion bzw. der Grad der Vereinfachung des zu kommunizierenden Schutzfeldes variabel anpassbar ist. Das Schutzfeld 3 kann seine Form dabei dynamisch während des Betriebs des Manipulatorsystems 10 anpassen. Somit erkennt ein Werker, dass er nicht den durch die Lichtprojektion 5 gekennzeichneten Bereich betreten sollte, da dies zu einer Schutzfeldverletzung führen könnte.

In der Figur 2 ist ein örtlich stationäres Manipulatorsystem 10 dargestellt, welches einen Manipulator 11 umfasst, der beweglich ist. Wie bei der Figur 1 wird hier mittels einer Überwachungseinrichtung 2 ein Schutzfeld 3 lokal überwacht, um Kollisionen zwischen dem Manipulator 11 und einem in das Schutzfeld 3 eindringenden Objekt zu verhindern. Ferner wird mit einer Projektionsvorrichtung umfassend einen Projektor 4 eine Lichtprojektion 5 erzeugt, welche wie in der Figur 1 einen größeren Bereich abdeckt, als das mittels der Überwachungseinrichtung 2 überwachte Schutzfeld 3. Somit kann einem Werker signalisiert werden, welchem Bereich er sich nicht nähern sollte.

Die Lichtprojektionen 5 können dabei lediglich durch eine Linie gebildet sein, welche sich um das Manipulatorsystem 10 herum erstrecken kann, jedoch nicht eine geschlossene Kontur bilden muss. Die Lichtprojektion 5 kann vorteilhaft auch teilweise oder vollständig füllend durch die Projektionsvorrichtung beleuchtet werden.

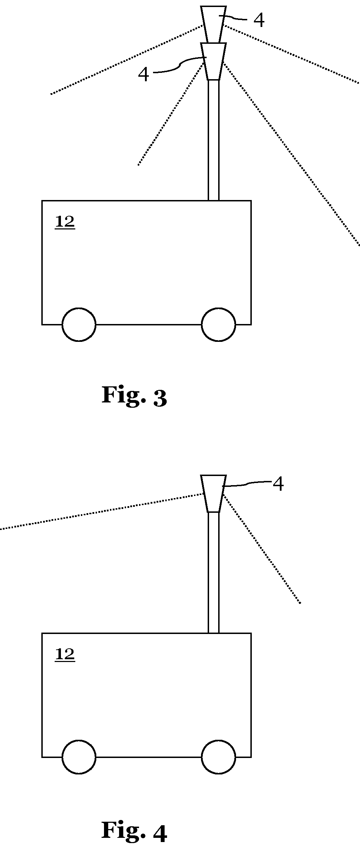

Das in den Figuren 1 und 2 dargestellte Manipulatorsystem 10 kann stationär oder beweglich sein. In den Figuren 3 bis 8 werden Ausführungsformen von fahrerlosen Transportsystem beschrieben, welche ebenso bei stationären Manipulatorsystemen anwendbar sind. Die fahrerlosen Transportsysteme können dabei auch Teil des Manipulatorsystems 10 der Figur 1 oder 2 sein.

In der Figur 3 ist ein fahrerloses Transportsystem 12 dargestellt, welches zwei Projektoren 4 umfasst. Die Projektoren 4 sind an einer erhöhten Position bereitgestellt und können verschiedene Lichtprojektionen auf den Boden erzeugen. Durch wahlweises Ansteuern einer der Projektoren 4 kann gesteuert werden, welches der entsprechenden beiden verschiedenen Lichtprojektionen projiziert werden soll. Somit kann, wenn beispielsweise nur zwei verschiedene Schutzfeldkonfigurationen des fahrerlosen Transportsystems vorliegen, diese kostengünstig mittels zwei verschiedenen, aber technisch einfachen Projektoren 4 signalisiert werden. Ferner können auch beide Projektoren 4 gleichzeitig Projizieren, und gemeinsam Schutzfeldinformationen an die Umgebung signalisieren.

In der Figur 4 ist ein fahrerloses Transportsystem 12 dargestellt, mit einem erhöht bereitgestellten Projektor 4. Dieser Projektor 4 kann verschiedene Muster projizieren. Dabei wird das Licht bzw. das Muster direkt auf den Boden projiziert. Der Projektor4 kann dabei sein Projektionsmuster variabel anpassen. Das Transportsystem 12 ist somit sehr flexibel einsetzbar, da je nach Anwendung ein individuelles Projektionsmuster erzeugt werden kann, um die jeweilige Schutzfeldinformation an die Umgebung zu signalisieren.

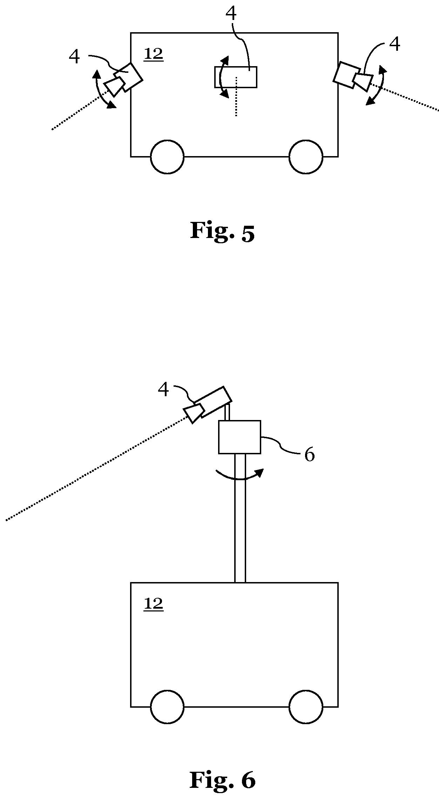

In der Figur 5 ist ein fahrerloses Transportsystem 12 dargestellt, mit drei Projektoren 4, die beweglich angeordnet sind. Da die Projektoren 4 beweglich gelagert sind, kann die Position der Lichtprojektion verändert werden. Die Projektoren 4 können dabei drehbar und/oder schwenkbar gelagert sein. Durch eine Winkeländerung der Projektoren 4 relativ zum fahrerlosen Transportsystem 10 kann die Position der Lichtprojektion auf dem Boden variiert werden, und somit die Projektion verändert werden. Ferner kann durch die Bewegung eines oder mehrerer Projektoren 4 ein bestimmtes Muster auf dem Boden dargestellt werden.

In der Figur 6 ist ein fahrerloses Transportsystem 12 dargestellt, bei welchem ein Projektor 4 auf einer drehbaren Platte 6 bereitgestellt ist. Der Fachmann versteht, dass ein Projektor dabei drehbar gelagert an dem System bereitgestellt sein kann. Von dem Projektor 4 wird eine sichtbare Punktprojektion auf den Boden erzeugt. Durch schnelles Drehen der drehbaren Platte 6 kann somit eine geschlossene Kontur auf dem Boden dargestellt werden. Der Projektor 4 kann dabei fest montiert sein, sodass durch Drehen des Projektors 4 ein Kreis auf dem Boden dargestellt wird. Obwohl nur ein Projektor 4 in dieser Ausführungsform dargestellt ist, können auch mehrere solcher Projektoren auf der Platte 6 bereitgestellt sein. Durch Umschalten zwischen diesen Projektoren können vorteilhaft verschiedene Durchmesser auf dem Boden dargestellt werden. Es können vorteilhaft auch mehrere Projektoren verwendet werden um eine geschlossene Kontur auf den Boden zu projizieren, wobei die Drehgeschwindigkeit durch die Verwendung mehrerer Projektoren verringert werden kann. Der Projektor 4 kann dabei auch schwenkbar gelagert werden, sodass durch eine mechanische Führung ein gewünschtes Muster dargestellt werden kann. Durch Veränderung der Position der Führung kann die Größe des Musters verändert werden. Ferner kann der Winkel des Projektors 4 aktuiert werden, beispielsweise elektrisch, pneumatisch oder hydraulisch. Durch ein entsprechendes Steuersignal kann der Winkel des Projektors 4 in Abhängigkeit vom Winkel der drehbaren Platte 6 eingestellt werden, sodass ein gewünschtes Projektionsmuster auf den Boden projiziert wird.

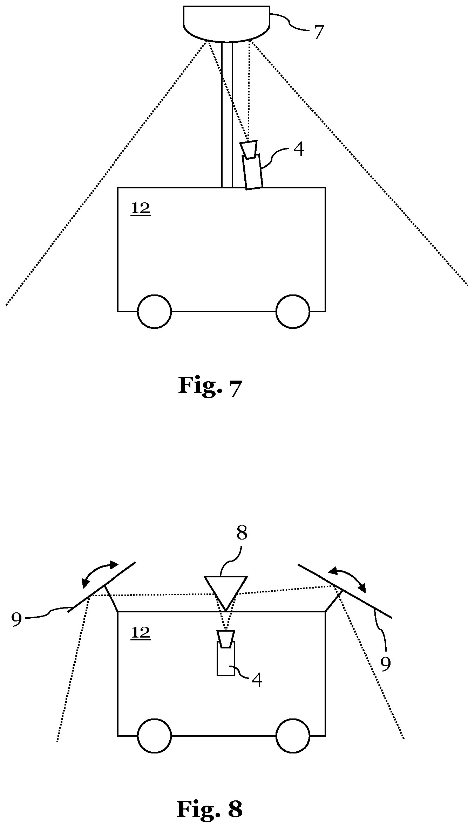

In der Figur 7 ist ein fahrerloses Transportsystem 12 dargestellt, auf welchem eine Linse 7 in erhöhter Position montiert ist. Neben einer Linse kann auch ein Spiegel und/oder ein Prisma eingesetzt werden. Ein auf dem Transportsystem 12 bereitgestellter Projektor 4 ist auf diese Linse 7 gerichtet. Die Linse reflektiert bzw. bricht das von dem Projektor 4 emittierte Licht derart, dass eine gewünschte Lichtprojektion auf dem Boden dargestellt wird. Durch die Verwendung kann ein weiter Bereich um das fahrerlose Transportsystem 12 herum mittels des Projektors 4 erreicht bzw. beleuchtet werden. Die Linse 7 kann dabei bewegt werden, um die Position der Lichtprojektion zu verändern. Ferner kann auch die Brecheigenschaft der Linse variiert werden, um ein gewünschtes Muster an einer gewünschten Stelle an der Umgebung zu projizieren. Durch Variation der von dem Projektor 4 emittierten Strahlung kann ebenfalls die erzeugte Projektion variiert werden. Ferner können auch mehrere Projektoren 4 auf die Linse 7 gerichtet sein, um ein gewünschtes Projektionsmuster zu erzeugen.

In der Figur 8 ist ein fahrerloses Transportsystem 12 dargestellt, bei welchem das von einem Projektor 4 emittierte Licht über mehrere Spiegel 8, 9 reflektiert wird, um die gewünschte Lichtprojektion auf dem Boden darzustellen. Hier können beispielsweise die äußeren Spiegel 9 beweglich sein, um die Lichtprojektion zu steuern.

Der Fachmann versteht, dass auch eine Kombination einzelner Aspekte der oben genannten Ausführungsformen möglich ist. Beispielsweise können mehrere Spiegel oder Linsen hintereinander angeordnet sein, die Reflektions- bzw. Brechungscharakteristik gezielt verändert werden, usw., um eine gewünschte Lichtprojektion darzustellen.

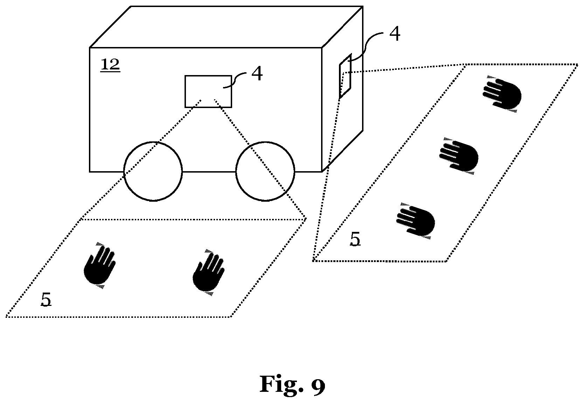

In der Figur 9 ist ein fahrerloses Transportsystem 12 dargestellt, welches sich in der Figur nach rechts bewegt. In Abhängigkeit der Fahrtrichtung und der Geschwindigkeit werden Projektoren, die hier Laserquellen umfassen, derart angesteuert, dass unterschiedliche Muster vor und seitlich des fahrerlosen Transportsystems 12 dargestellt werden. Durch Darstellen von Linien kann direkt signalisiert werden, dass diese Bereiche nicht betreten werden sollen. Die Lichtprojektion 5 auf dem Boden umfasst hier auch Symbole, welche einem Werker verdeutlichen, dass der durch die Lichtprojektion 5 markierte Bereich nicht betreten werden soll.

Vorzugsweise kann optisch und/oder akustisch signalisiert werden, wenn ein Schutzfeld seine Größe ändert. Dadurch kann ein Werker erkennen, dass ein gewünschter Bereich zu verlassen ist. Dabei kann insbesondere das Manipulatorsystem mit dem Umschalten der Schutzfelder warten bis der entsprechende Bereich frei ist. Die akustischen Signale können auch ausgegeben werden, wenn ein optisches Signalisieren von Informationen nicht möglich ist, oder wenn eine Fehlerquelle nicht innerhalb eines vordefinierten Zeitintervalls nach optischen Signalisieren behoben wurde.

Durch die Projektion können auch weitere Informationen dargestellt werden. Beispielsweise kann die Farbe der Projektionen gewechselt werden, wenn das Schutzfeld verletzt wird. Zudem können auch textuelle und/oder symbolische Informationen eingeblendet werden, oder eine anstehende Schutzfeldänderung dargestellt werden, um eine MRK-Umgebung entsprechend zu informieren.

Mit der Projektionsvorrichtung können die durch Menschen zu meidende Flächen eindeutig gekennzeichnet werden. Schraffuren und genormte Warnsymbole können durch starke Lichtstrahler, wie beispielsweise Laser, direkt auf die entscheidende Position abgebildet werden. Insbesondere vorzugsweise kann ein aussagekräftiger Stromfluss der Laserquelle überwacht werden, um einen Defekt zu erkennen.

### Bezugszeichenliste:

- 10: Manipulatorsystem
- 11: Manipulator
- 12: Fahrerloses Transportsystem
- 2: Laserscanner
- 3: Schutzfeld
- 4: Projektor
- 5: Lichtprojektion
- 6: drehbare Platte
- 7: Linse
- 8,9: Spiegel

## Patentansprüche

1. Fahrerloses Transportsystem (12), aufweisend
eine Überwachungseinrichtung (2), die eingerichtet ist, um ein Schutzfeld (3) des Transportsystems (1, 12) zu überwachen, **dadurch gekennzeichnet, dass** das Transportsystem (1, 12) zusätzlich zur Überwachungseinrichtung, eine Projektionsvorrichtung (4) umfasst, die eingerichtet ist, um Schutzfeldinformation an die Umgebung des Transportsystems (1, 12) zu projizieren,
wobei die Projektionsvorrichtung (4) eingerichtet ist, um eine Lichtprojektion (5) an die Umgebung des Transportsystems (1, 12) zu erzeugen, um die Schutzfeldinformation sichtbar zu projizieren,
wobei die Schutzfeldinformation Information zu einem zukünftigen Schutzfeld umfasst, welches einer zukünftigen Überwachung des Transportsystems (1, 12) zu einem späteren Zeitpunkt zugrunde liegt.

2. Transportsystem nach Anspruch 1, wobei die Überwachungseinrichtung (2) ein Mittel zur Erfassung von Objekten in dem Schutzfeld (3) umfasst, wobei das Mittel vorzugsweise eine laser-, kamera-, radar-, ultraschall-, infrarot- und/oder lidargestützte Vorrichtung umfasst.

3. Transportsystem (1, 12) nach einem der Ansprüche 1 bis 2, wobei die Lichtprojektion (5) zumindest teilweise auf den Boden der Umgebung gerichtet ist.

4. Transportsystem (1, 12) nach Anspruch 3, wobei eine Kontur der Lichtprojektion (5) rund, oval, kreisförmig, elliptisch oder rechteckig ist, und/oder wobei die Kontur der Lichtprojektion (5) verschieden von einer Kontur des Schutzfeldes (3) ist.

5. Transportsystem (1, 12) nach Anspruch 3 oder 4, wobei die Lichtprojektion (5) eine Kodierung, und insbesondere ein Muster und/oder ein Symbol entsprechend der Schutzfeldinformation umfasst.

6. Transportsystem (1, 12) nach einem der Ansprüche 3 bis 5, wobei eine horizontale Erstreckung der Lichtprojektion (5) zumindest einer horizontalen Erstreckung des Schutzfeldes (3) entspricht.

7. Transportsystem (1, 12) nach einem der Ansprüche 3 bis 6, wobei die Lichtprojektion (5) auf einer horizontalen Ebene zumindest einen durch das Schutzfeld (3) abgedeckten Bereich abdeckt, und vorzugsweise auf der horizontalen Ebene einen größeren Bereich als den durch das Schutzfeld (3) abgedeckten Bereich abdeckt, wobei der größere Bereich vorzugsweise 101% bis 150%, weiter vorzugsweise 102% bis 140%, weiter vorzugsweise 103% bis 130%, weiter vorzugsweise 104% bis 120% und am meisten bevorzugt 105% bis 110% des durch das Schutzfeld (3) abgedeckten Bereichs entspricht.

8. Transportsystem (1, 12) nach einem der Ansprüche 1 bis 7, wobei die Projektionsvorrichtung (4) zumindest einen Projektor (4) und ein separat von dem Projektor (4) bereitgestelltes Umlenkmittel (7, 8, 9) umfasst, welches das von dem Projektor (4) emittierte Licht auf die Umgebung lenkt, wobei das Umlenkmittel (7, 8, 9) vorzugsweise einen Spiegel (8, 9) und/oder eine Linse (7) umfasst, wobei das Umlenkmittel (7, 8, 9) ferner vorzugsweise beweglich angeordnet ist.

9. Transportsystem (1, 12) nach einem der Ansprüche 1 bis 8, wobei die Projektionsvorrichtung (4) zumindest einen Projektor (4) umfasst, welcher beweglich und vorzugsweise drehbar an dem Transportsystem (1, 12) bereitgestellt ist.

10. Transportsystem (1, 12) nach einem der Ansprüche 1 bis 9, wobei die Projektionsvorrichtung (4) zumindest einen Projektor (4) und zumindest eine Maske umfasst, wobei die Maske von dem Projektor (4) beleuchtet wird und ein Projektionsmuster definiert.

11. Verfahren zum Betreiben eines Transportsystems (1, 12), und insbesondere eines Transportsystems (1, 12) nach einem der Ansprüche 1 bis 10, wobei das Transportsystem (1, 12) eine Überwachungseinrichtung (2) und ferner eine Projektionsvorrichtung (4) umfasst, das Verfahren aufweisend:
Überwachen eines Schutzfeldes (3) des Transportsystems (1, 12) mittels der Überwachungseinrichtung (2); und
Projizieren von Schutzfeldinformation an die Umgebung des Transportsystems (1, 12) mittels der Projektionsvorrichtung (4) umfassend ein Projizieren einer Lichtprojektion (5) an die Umgebung des Transportsystems,
wobei die Schutzfeldinformation Information zu einem zukünftigen Schutzfeld umfasst, welches einer zukünftigen Überwachung des Transportsystems (1, 12) zu einem späteren Zeitpunkt zugrunde liegt.

12. Transportsystem (1, 12) oder Verfahren nach einem der Ansprüche 1 bis 11, wobei das Projizieren von Schutzfeldinformation basierend auf zumindest einer der folgenden Größen erfolgt oder wobei die Projektionsvorrichtung eingerichtet ist um die Schutzfeldinformation basierend auf einer der folgenden Größen durchzuführen:
- Eine Form und/oder eine Formänderung des Schutzfeldes (3);
- eine Größe und/oder eine Größenänderung des Schutzfeldes (3);
- einen Zustand und/oder eine Zustandsänderung des Transportsystems (1, 12);
- eine Geschwindigkeit und/oder eine Beschleunigung des Transportsystems (1, 12);
- eine Orientierung und/oder eine Umorientierung des Transportsystems (1, 12);
- eine Bahnplanung des Transportsystems (1, 12);
- einen Betriebsmodus des Transportsystems (1, 12);
- eine Umgebungskarte.

13. Transportsystem (1, 12) oder Verfahren nach einem der Ansprüche 1 bis 12, wobei die Projektionsvorrichtung eingerichtet ist das Projizieren von Schutzfeldinformationen quasikontinuierlich während des Betriebs des Transportsystems (1, 12) und vorzugsweise in jedem IPO-Takt des Transportsystems (1, 12) anzupassen und wobei beim Verfahren das Projizieren von Schutzfeldinformation quasikontinuierlich während des Betriebs des Transportsystems (1, 12) und vorzugsweise in jedem IPO-Takt des Transportsystems (1, 12) angepasst wird.

14. Transportsystem (1, 12) oder Verfahren nach einem der Ansprüche 1 bis 13, wobei Projektionsvorrichtung und Überwachungseinrichtung räumlich getrennt angeordnet sind, wobei weiter vorzugsweise die Projektionsvorrichtung an einer erhöhten Position relativ zur Überwachungseinrichtung vorgesehen ist.

## Claims

1. A driverless transport system (12), having
a monitoring device (2) which is configured to monitor a protective field (3) of the transport system (1, 12), **characterized in that**
the transport system (1, 12) comprises, in addition to the monitoring device, a projection device (4) which is configured to project protective field information to the surroundings of the transport system (1, 12),
wherein the projection device (4) is configured to generate a light projection (5) onto the surroundings of the transport system (1, 12) in order to visibly project the protective field information,
wherein the protective field information comprises information on a future protective field which is the basis for a future monitoring of the transport system (1, 12) at a later point in time.

2. The transport system according to claim 1, wherein the monitoring device (2) comprises a means for detecting objects in the protective field (3), wherein the means preferably comprises a laser-, camera-, radar-, ultrasonic-, infrared- and/or lidar-based device.

3. The transport system (1, 12) according to any one of claims 1 to 2, wherein the light projection (5) is directed at least partially onto the ground of the surroundings.

4. The transport system (1, 12) according to claim 3, wherein a contour of the light projection (5) is round, oval, circular, elliptical or rectangular, and/or wherein the contour of the light projection (5) is different from a contour of the protective field (3).

5. The transport system (1, 12) according to claim 3 or 4, wherein the light projection (5) comprises a coding, and in particular a pattern and/or a symbol corresponding to the protective field information.

6. The transport system (1, 12) according to any one of claims 3 to 5, wherein a horizontal extension of the light projection (5) corresponds at least to a horizontal extension of the protective field (3).

7. The transport system (1, 12) according to any one of claims 3 to 6, wherein the light projection (5) covers on a horizontal plane at least an area covered by the protective field (3), and preferably covers on the horizontal plane a larger area than the area covered by the protective field (3), wherein the larger area preferably corresponds to 101% to 150%, more preferably 102% to 140%, more preferably 103% to 130%, more preferably 104% to 120% and most preferably 105% to 110% of the area covered by the protective field (3).

8. Transport system (1, 12) according to any one of claims 1 to 7, wherein the projection device (4) comprises at least one projector (4) and a redirecting means (7, 8, 9) provided separately from the projector (4), which directs the light emitted by the projector (4) to the surroundings, wherein the redirecting means (7, 8, 9) preferably comprises a mirror (8, 9) and/or a lens (7), wherein the redirecting means (7, 8, 9) is further preferably arranged movably.

9. The transport system (1, 12) according to any one of claims 1 to 8, wherein the projection device (4) comprises at least one projector (4) which is movably and preferably rotatably provided on the transport system (1,12).

10. The transport system (1, 12) according to any one of claims 1 to 9, wherein the projection device (4) comprises at least one projector (4) and at least one mask, wherein the mask is illuminated by the projector (4) and defines a projection pattern.

11. A method for operating a transport system (1,12), and in particular of a transport system (1, 12) according to any one of claims 1 to 10, wherein the transport system (1, 12) comprises a monitoring device (2) and further comprises a projection device (4), the method comprising:
Monitoring a protective field (3) of the transport system (1, 12) by means of the monitoring device (2); and
projecting protective field information to the surroundings of the transport system (1, 12) by means of the projection device (4) comprising projecting a light projection (5) to the surroundings of the transport system,
wherein the protective field information comprises information on a future protective field which is the basis for a future monitoring of the transport system (1, 12) at a later point in time.

12. The transport system (1, 12) or method according to any one of claims 1 to 11, wherein the projection of protective field information is performed based on at least one of the following variables, or wherein the projection device is configured to perform the protective field information based on one of the following variables:
- A shape and/or a change in shape of the protective field (3);
- a size and/or a size change of the protective field (3);
- a state and/or a change in state of the transport system (1, 12);
- a velocity and/or an acceleration of the transport system (1, 12);
- an orientation and/or a reorientation of the transport system (1, 12);
- a path planning of the transport system (1, 12);
- an operating mode of the transport system (1, 12);
- a surroundings map.

13. The transport system (1, 12) or method according to any one of claims 1 to 12, wherein the projection device is configured to adjust the projection of protective field information quasi-continuously during the operation of the transport system (1, 12) and preferably in each IPO cycle of the transport system (1, 12), and wherein in the method the projection of protective field information is adjusted quasi-continuously during the operation of the transport system (1, 12) and preferably in each IPO cycle of the transport system (1,12).

14. The transport system (1, 12) or method according to any one of claims 1 to 13, wherein the projection device and the monitoring device are spatially separately arranged, wherein further preferably the projection device is provided at an elevated position relative to the monitoring device.

## Revendications

1. Système de transport sans conducteur (12) comprenant
un équipement de surveillance (2) qui est agencé pour surveiller un champ de protection (3) du système de transport (1, 12), **caractérisé en ce que** le système de transport comprend, en plus de l'équipement de surveillance, un dispositif de projection (4) qui est agencé pour projeter une information de champ de protection dans l'environnement du système de transport (1, 12),
le dispositif de projection (4) étant agencé pour générer une projection lumineuse (5) dans l'environnement du système de transport (1, 12) afin de projeter l'information de champ de protection de manière visible,
l'information de champ de protection incluant de l'information sur un champ de protection ultérieur, lequel sert de base à une surveillance ultérieure du système de transport (1, 12) à un moment ultérieur.

2. Système de transport selon la revendication 1, l'équipement de surveillance (2) incluant un moyen de détection d'objets dans un champ de protection (3), le moyen incluant de préférence un dispositif à laser, à caméra, à radar, à ultrasons, à infrarouges et/ou à lidar.

3. Système de transport (1, 12) selon une des revendications 1 à 2, la projection lumineuse (5) étant orientée au moins en partie vers le sol de l'environnement.

4. Système de transport (1, 12) selon la revendication 3, un contour de la projection lumineuse (5) étant rond, ovale, circulaire, elliptique ou rectangulaire, et/ou le contour de la projection lumineuse (5) étant différent d'un contour du champ de protection (3).

5. Système de transport (1, 12) selon la revendication 3 ou 4, la projection lumineuse (5) incluant un codage et en particulier un motif et/ou un symbole correspondant à l'information de champ de protection.

6. Système de transport (1, 12) selon une des revendications 3 à 5, une extension horizontale de la projection lumineuse (5) correspondant au moins à une extension horizontale du champ de protection (3).

7. Système de transport (1, 12) selon une des revendications 3 à 6, la projection lumineuse (5) couvrant sur un plan horizontal au moins une zone couverte par le champ de protection (3), et de préférence sur le plan horizontal une zone supérieure à la zone couverte par le champ de protection (3), la zone supérieure correspondant de préférence à 101 % jusqu'à 150 %, plus préférentiellement à 102 % jusqu'à 140 %, plus préférentiellement de 103 % jusqu'à 130 %, plus préférentiellement de 104 % jusqu'à 120 % et le plus préférentiellement de 105 % jusqu'à 110 % de la zone couverte par le champ de protection (3).

8. Système de transport (1, 12) selon une des revendications 1 à 7, le dispositif de projection (4) incluant au moins un projecteur (4) et un moyen de déviation (7, 8, 9) qui est fourni séparément du projecteur (4) et qui dirige la lumière émise par le projecteur (4) vers l'environnement, le moyen de déviation (7, 8, 9) incluant de préférence un miroir (8, 9) et/ou une lentille (7), le moyen de déviation (7, 8, 9) étant en outre disposé de préférence de manière mobile.

9. Système de transport (1, 12) selon une des revendications 1 à 8, le dispositif de projection (4) incluant au moins un projecteur (4) qui est fourni de manière mobile et de préférence tournante sur le système de transport (1, 12).

10. Système de transport (1, 12) selon une des revendications 1 à 9, le dispositif de projection (4) incluant au moins un projecteur (4) et au moins un masque, le masque étant éclairé par le projecteur (4) et définissant un motif de projection.

11. Procédé de fonctionnement d'un système de transport (1, 12) et en particulier d'un système de transport (1, 12) selon une des revendications 1 à 10, le système de transport (1, 12) incluant un équipement de surveillance (2) et en outre un dispositif de projection (4), le procédé consistant à :
surveiller un champ de protection (3) du système de transport (1, 12) au moyen de l'équipement de surveillance (2) ; et à
projeter une information de champ de protection dans l'environnement du système de transport (1, 12) au moyen du dispositif de projection (4), y compris à projeter une projection lumineuse (5) dans l'environnement du système de transport,
l'information de champ de protection incluant de l'information sur un champ de protection ultérieur, lequel sert de base à une surveillance ultérieure du système de transport (1, 12) à un moment ultérieur.

12. Système de transport (1, 12) ou procédé selon une des revendications 1 à 11, la projection d'information de champ de protection s'effectuant sur la base d'au moins une des grandeurs suivantes et le dispositif de projection étant agencé pour réaliser l'information de champ de protection sur la base d'une des grandeurs suivantes :
- une forme et/ou une variation de forme du champ de protection (3) ;
- une grandeur et/ou une variation de grandeur du champ de protection (3) ;
- un état et/ou une variation d'état du système de transport (1, 12) ;
- une vitesse et/ou une accélération du système de transport (1, 12) ;
- une orientation et/ou une réorientation du système de transport (1, 12) ;
- une planification de trajectoire du système de transport (1, 12) ;
- un mode de fonctionnement du système de transport (1, 12) ;
- une carte d'environnement.

13. Système de transport (1, 12) ou procédé selon une des revendications 1 à 12, le dispositif de projection étant agencé pour adapter la projection d'informations de champ de protection de manière quasi continue pendant le fonctionnement du système de transport (1, 12) et de préférence dans chaque cadence d'interpolation du système de transport (1, 12), et le procédé adaptant la projection d'information de champ de protection de manière quasi continue pendant le fonctionnement du système de transport (1, 12) et de préférence dans chaque cadence d'interpolation du système de transport (1, 12).

14. Système de transport (1, 12) ou procédé selon une des revendications 1 à 13, le dispositif de projection et l'équipement de surveillance étant disposés de manière spatialement séparée, plus préférentiellement le dispositif de projection étant prévu dans une position surélevée par rapport à l'équipement de surveillance.
